# EUROPÄISCHE PATENTSCHRIFT

(11) **EP 0 715 892 B1**
(45) Veröffentlichungstag und Bekanntmachung des Hinweises auf die Patenterteilung: **28.04.1999**
(21) Anmeldenummer: 95117162.8
(22) Anmeldetag: 31.10.1995
(51) Int. Cl.: B02C 21/00

(54) **Verfahren und Anlage zur gemeinsamen Mahlung von wenigstens zwei unterschiedlich mahlbaren Stoffen**
Method and plant for the grinding together of two or more substances of different grindability
Procédé et installation pour le broyage commun d'au-moins deux substances ayant des caractéristiques de broyage différentes

(30) Priorität: 07.12.1994 DE 4443588
(43) Veröffentlichungstag der Anmeldung: 12.06.1996
(73) Patentinhaber: KRUPP POLYSIUS AG, 59269 Beckum (DE)
(72) Erfinder: Patzelt, Norbert, Dipl.-Ing., D-59269 Beckum (DE); Blasczyk, Gotthardt, Dipl.-Ing., D-59269 Beckum (DE)
(74) Vertreter: Tetzner, Michael, Dipl.-Ing.

(56) Entgegenhaltungen:
- EP-A- 0 374 491
- DE-A- 3 919 416
- DE-C- 3 314 103
- PATENT ABSTRACTS OF JAPAN vol. 14 no. 254 (C-724) [4197] ,31.Mai 1990 & JP-A-02 071856 (ISHIKAWAJIMA HARIMA HEAVY IND CO LTD.) 12.März 1990,

## Beschreibung

Die Erfindung betrifft ein Verfahren und eine Anlage zur gemeinsamen Mahlung von wenigstens zwei unterschiedlich mahlbaren Stoffen.

Ein Verfahren sowie eine Anlage gemäß den Oberbegriffen der Ansprüche 1 und 4 ist beispielsweise aus der DE-C-33 14 103 bekannt, wobei der schwerer mahlbare Stoff vorzerkleinert und danach zusammen mit dem anderen Stoff zum Fertiggut weitervermahlen wird. Bei diesem bekannten Verfahren wird der schwerer mahlbare Stoff vor seiner gemeinsamen Vermahlung mit dem leichter mahlbaren Stoff im Walzenspalt einer Walzenpresse nach dem Prinzip der Gutbettzerkleinerung vorzerkleinert. Das den Walzenspalt der Walzenpresse verlassende vorbehandelte Gut wird anschließend zusammen mit dem nicht vorbehandelten leichter mahlbaren Stoff der gemeinsamen Vermahlung zugeführt. Dieses Verfahren zeichnet sich gegenüber einem Verfahren ohne Vorzerkleinerung des schwerer mahlbaren Stoffs durch eine deutliche Energieeinsparung aus.

Der Erfindung liegt die Aufgabe zugrunde, das Verfahren gemäß dem Oberbegriff des Anspruches 1 sowie die Anlage gemäß dem Oberbegriff des Anspruches 4 derart weiterzuentwickeln, daß sich die Eigenschaften des Fertigguts verbessern.

Diese Aufgabe wird durch die kennzeichnenden Merkmale der Ansprüche 1 und 4 gelöst, indem der schwerer mahlbare Stoff vor der Weitervermahlung auf eine Blaine-Mahlfeinheit von wenigstens 700 cm²/g, vorzugsweise jedoch wenigstens 1000 cm²/g vorzerkleinert wird.

Weitere Ausgestaltungen der Erfindung sind Gegenstand der Unteransprüche.

Bei der gemeinsamen Mahlung von Klinker und Kalkstein zur Herstellung von Zement weist das nach dem erfindungsgemäßen Verfahren hergestellte Fertiggut eine höhere Festigkeit auf, wenn es auf die gleiche Endfeinheit wie herkömmliches Fertiggut gemahlen wird. Nachdem sich die Festigkeit des Fertiggutes im wesentlichen nach der Feinheit des Klinkers richtet, kann der Anteil des wesentlich kostengünstigeren Kalksteins beim erfindungsgemäß hergestellten Fertiggut erhöht werden, wenn keine höhere Festigkeit erforderlich ist.

Weitere Vorteile und Ausgestaltungen der Erfindung werden anhand der nachfolgenden Beschreibung und der

Zeichnung näher erläutert. In der Zeichnung zeigen:
Fig.1 eine schematische Darstellung einer ersten erfindungsgemäßen Anlage zur gemeinsamen Mahlung von wenigstens zwei unterschiedlich mahlbaren Stoffen;
Fig. 2 ein Diagramm, in dem der Kalksteinanteil gegenüber der Festigkeit für unterschiedlich vorzerkleinerten Klinker aufgetragen ist;
Fig. 3 eine schematische Darstellung einer zweiten erfindungsgemäßen Anlage zur gemeinsamen Mahlung von wenigstens zwei unterschiedlichen Mahlstoffen.

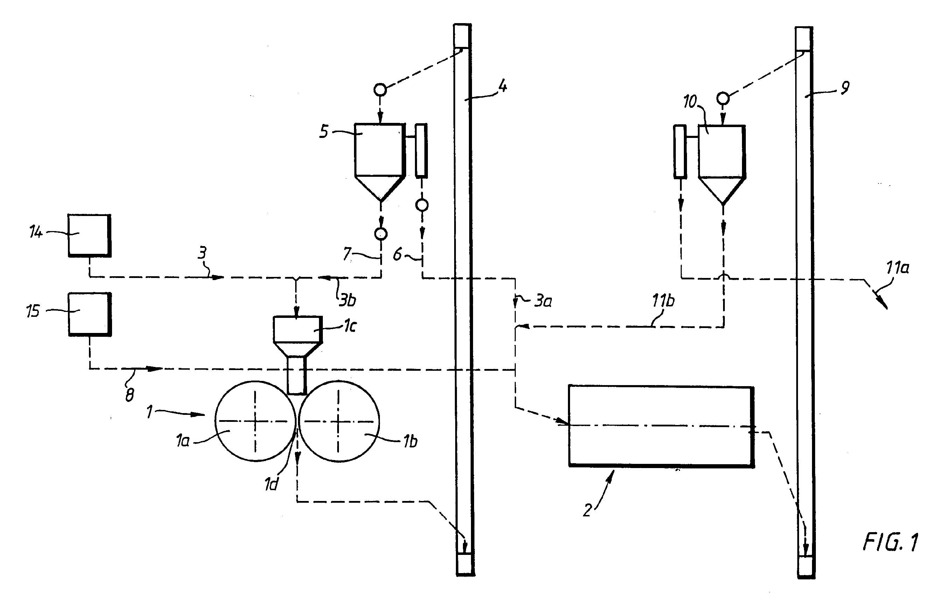

Bei der in Fig.1 dargestellten ersten erfindungsgemäßen Anlage zur gemeinsamen Mahlung von wenigstens zwei unterschiedlich mahlbaren Stoffen handelt es sich um eine sogenannte Kombi-Mahlanlage mit einer ersten Mühle 1 und einer zweiten Mühle 2.

Die erste Mühle 1 wird vorzugsweise durch eine Gutbettwalzenmühle gebildet, die zwei mit hohem Druck gegeneinandergepreßte Mahlwalzen 1a, 1b aufweist. In dieser ersten Mühle 1 wird ein schwerer mahlbarer Stoff 3 zunächst vorzerweinert, bevor er zusammen mit einem leichter mahlbaren Stoff 8 in der zweiten Mühle 2 zum Fertiggut weitervermahlen wird.

[0011 ] Bei der Vorzerkleinerung des schwerer mahlbaren Stoffs wird dieser zunächst aus einem ersten Vorratsbunker 14 einem Aufgabeschacht 1c der ersten Mühle 1 zugeführt. Im zwischen den beiden Mahlwalzen 1a, 1b gebildeten Walzenspalt 1 wirkt auf den Stoff 3 ein Druck von mehr als 2 t/cm Walzenlänge und der Stoff wird hierbei nach dem Prinzip der Gutbettzerkleinerung und gegebenenfalls der Einzelkornzerkleinerung druckzerkleinert.

Das den Walzenspalt 1d verlassende vorzerkleinerte Gut wird über eine geeignete erste Fördereinrichtung 4, beispielsweise ein Becherwerk, einer Trenneinrichtung 5 zugeführt, die beispielsweise durch einen allgemein bekannten Hochleistungssichter gebildet wird. Diese Trenneinrichtung teilt den vorzerkleinerten Stoff der ersten Mühle 1 in eine erste Teilmenge 3a mit einer Blaine-Mahlfeinheit von wenigstens 700, vorzugsweise 1000 cm²/g und eine verbleibende zweite Teilmenge 3b. Während die erste Teilmenge 3a über erste Fördermittel 6 zur zweiten Mühle 2 weitergeleitet wird, wird die zweite Teilmenge 3b über zweite Fördermittel 7 zum Aufgabeschacht 1 und damit zur ersten Mühle 1 zurückgeführt.

Der schwerer mahlbare Stoff 3 durchläuft diesen ersten Mahlkreislauf, der im wesentlichen durch die erste Mühle 1, die erste Fördereinrichtung 4 und die Trenneinrichtung 5 gebildet wird, so lange, bis er eine Blaine-Mahlfeinheit von mindestens 700, vorzugsweise mindestens 1000 cm²/g, aufweist.

Dieser vorzerkleinerte Stoff wird dann zusammen mit dem leichter mahlbaren Stoff 8 in der zweiten Mühle 2 zum Fertiggut weitervermahlen. Der Stoff 8 wird aus einem Vorratsbunker 15 über geeignete Dosiermittel aufgegeben und zur zweiten Mühle 2 weitergeleitet. Diese zweite Mühle 2 wird beispielsweise durch eine allgemein bekannte Rohrmühle gebildet und ist Bestandteil eines zweiten Mahlkreislaufes, der zudem eine zweite Fördereinrichtung 9 sowie eine zweite Trenneinrichtung 10 aufweist.

Die zweite Fördereinrichtung 9 kann beispielsweise wieder durch ein Becherwerk und die zweite Trenneinrichtung 10 durch einen Hochleistungssichter gebildet werden. Die in der zweiten Mühle 2 gemeinsam vermahlenen Stoffe gelangen über die zweite Fördereinrichtung 9 zur zweiten Trenneinrichtung 10. In dieser Trenneinrichtung wird das Gut wiederum entsprechend seiner Feinheit in zwei Teilmengen aufgeteilt. Die Teilmenge, die die gewünschte Endfeinheit aufweist, wird als Fertiggut 11a abgezogen, während die verbleibende Teilmenge 11b als Rücklaufgut zur zweiten Mühle 2 zurückgeführt wird.

Das erfindungsgemäße Verfahren läßt sich besonders vorteilhaft bei der Herstellung von Kompositzement anwenden. Kompositzemente können generell durch separate oder gemeinsame Mahlung der einzelnen Stoffe hergestellt werden. Bei der separaten Mahlung sind die Feinheiten und Korngrößenverteilungen der Einzelkomponenten frei wählbar. Damit lassen sich die Qualitätsparameter der Kompositzemente derart beeinflussen, daß ein Optimum hinsichtlich Energiebedarf und Festigkeitsentwicklung erzielt wird.

Bei der gemeinsamen Mahlung sind die Einzelkomponenten hinsichtlich Feinheit und Korngrößenverteilung nicht beeinflußbar. Erfahrungsgemäß wird sich die härtere Komponente im Grobbereich und die weichere Komponente im Feinbereich des Kompositzements ansammeln. Dabei findet eine energetisch ungünstige Übermahlung der weicheren Komponente statt. Das in der DE-C-33 14 103 offenbarte Verfahren sieht daher vor, daß der schwerer mahlbare Stoff zunächst in einer Gutbettwalzenmühle vorzerkleinert wird. Damit wird eine Angleichung der Korngrößenverteilung und Feinheit der Einzelkomponenten angestrebt.

Bei den der Erfindung zugrundeliegenden Versuchen hat sich jedoch gezeigt, daß sich bei einer Vorzer4deine- rung mit nur einem Durchlauf in der Gutbettwalzenmühle zwar eine deutliche Energieeinsparung erreichen läßt, jedoch die Auswirkungen auf die Eigenschaften des Fertiggutes, insbesondere dessen Festigkeit relativ unerheblich sind, da sich die Feinheiten der beiden Stoffe im Fertiggut kaum verschieben. Die nachfolgende Übersicht soll dies anhand von drei Beispielen näher erläutern, wobei im ersten Beispiel keine Vormahlung des schwerer mahlbaren Stoffes erfolgt ist, beim zweiten Beispiel der schwerer mahlbare Stoff durch einmaligen Durchlauf in der Gutbettwalzenznühle vorzerkleinert worden ist und im dritten Beispiel das Fertiggut gemäß dem erfindungsgemäßen Verfahren hergestellt worden ist. Bei den nachfolgenden Beispielen betrug die Korngröße der Ausgangsstoffe 0 bis 30 mm und das Fertiggut bestand aus 75 % Klinker und 25 % Puzzolan und wurde auf eine Endfeinheit von 4500 cm²/g nach Blaine vermahlen.

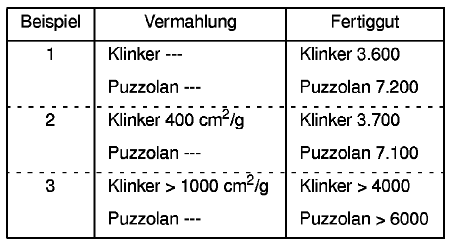

Wie aus der obigen Tabelle zu ersehen ist, ist erst bei einem mehrmaligen Durchlauf des schwerer mahlbaren Stoffs in der Gutbettwalzenmühle ein deutlicher Unterschied in den Feinheiten des Fertiggutes zu erkennen. Dieser Effekt tritt bereits auf, wenn man den schwerer mahlbaren Stoff wenigstens zweimal durch die Mühle 1 laufen läßt. Dabei entsteht eine Feinheit von etwa 700 cm²/g nach Blaine. Besonders gute Ergebnisse haben sich jedoch gezeigt, wenn man den schwerer mahlbaren Stoff auf wenigstens 1.500 cm²/g nach Blaine vorzerkleinert.

In einem weiteren Versuch wurden Klinker und Kalkstein gemeinsam auf eine Endfeinheit von 3.800 cm²1g nach Blaine vermahlen. Zudem wurde der Kalksteinanteil zwischen 20 und 30 % variiert.

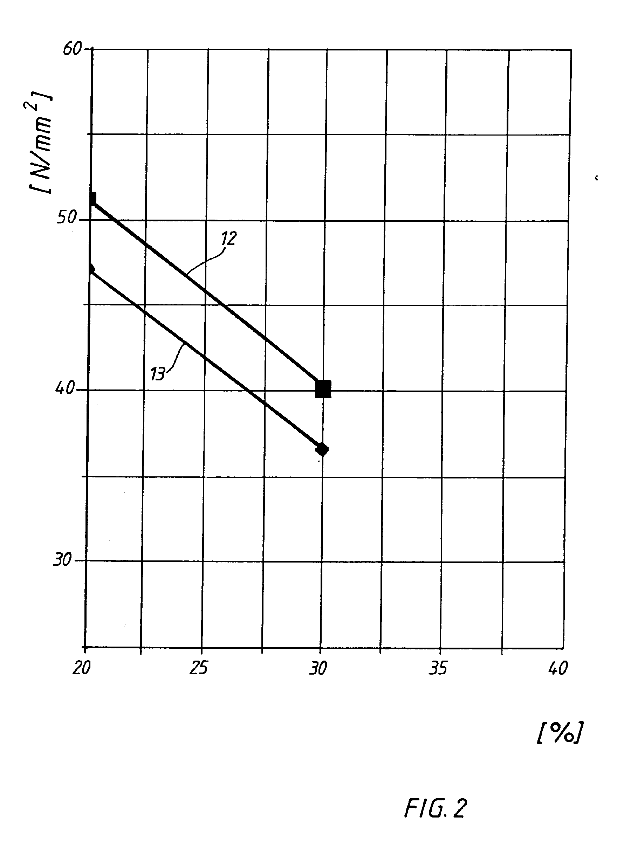

Bei dem in Fig.2 dargestellten Ergebnis ist der Kalksteinanteil in % gegenüber der 28-Tage-Druckfestigkeit (DIN EN 196) in Njmm2 aufgetragen. Dabei zeigt die Kurve 12 ein Fertigprodukt, bei dem der Klinker auf eine Feinheit von 2300 cm²/g vorzerkleinert wurde, während bei dem Fertiggut gemäß der Kurve 13 sofort eine gemeinsame Mahlung von Klinker und Kalkstein erfolgt ist.

Wie sich aus der Kurve entnehmen läßt, kann durch die Vorzerkleinerung des schwerer mahlbaren Stoffs eine Erhöhung der Festigkeit von fast 10% erreicht werden. Gemäß der obigen Ausführungsbeispiele könnte andererseits der Kalksteinanteil um etwa 7% erhöht werden, wenn eine höhere Festigkeit nicht gefordert ist. Nachdem der Kalksteinanteil wesentlich kostengünstiger als Klinker ist, lassen sich hierdurch die Herstellungs- und Energiekosten zusätzlich senken.

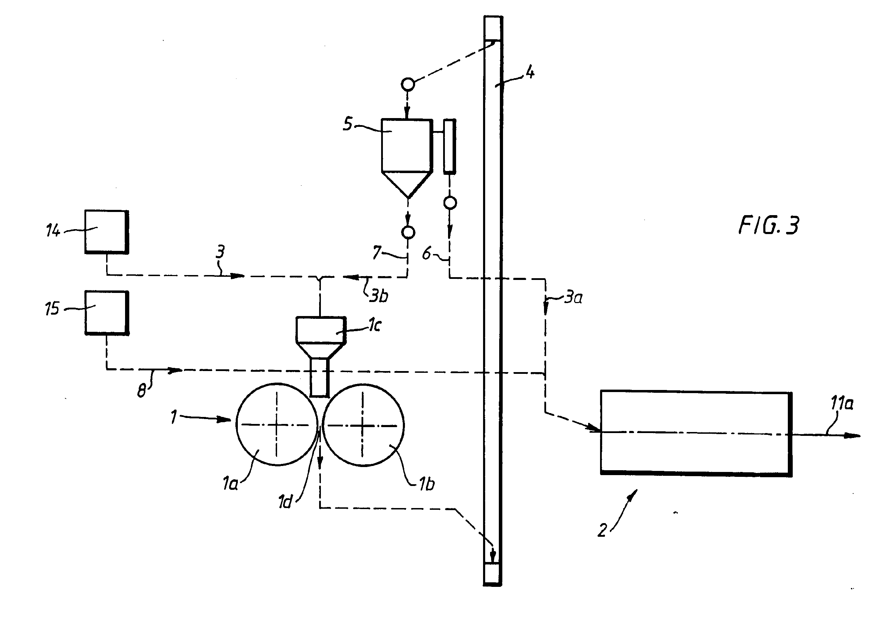

In Fig. 3 ist eine zweite erfindungsgemäße Anlage dargestellt, die sich von der Anlage gemäß Fig. 1 lediglich dadurch unterscheidet, daß die zweite Mühle 2 nicht mit einer zweiten Trenneinrichtung zusammenwirkt.

Dadurch wird der leichter mahlbare Stoff 8 zusammen mit dem auf eine bestimmte Feinheit vorzerkleinerten schwerer mahlbaren Stoff unmittelbar in der zweiten Mühle 2 auf Endfeinheit gemahlen. Da kein Grießgut zum Mühleneinlauf der zweiten Mühle zurückgeführt wird, wird der schwerer mahlbare Stoff, beispielsweise der Klinker, zum Teil feiner gemahlen als im ersten Ausführungsbeispiel, so daß sich eine noch bessere Festigkeitsentwicklung beim Fertigprodukt ergibt.

## Patentansprüche

1. Verfahren zur gemeinsamen Mahlung von wenigstens zwei unterschiedlich mahlbaren Stoffen (3, 8), wie Klinker und Kalkstein, wobei der schwerer mahlbare Stoff (3) vorzerkleinert und danach zusammen mit dem anderen Stoff (8) zum Fertiggut (11a) weitervermahlen wird,
dadurch gekennzeichnet, daß der schwerer mahlbare Stoff (8) vor der Weitervermahlung auf eine Blaine-Mahlfeinheit von wenigstens 700 cm²/g, vorzugsweise jedoch wenigstens 1000 cm²jg, vorzerkleinert wird.

2. Verfahren nach Anspruch 1, dadurch gekennzeichnet, daß der vorzerkleinerte, schwerer mahlbare Stoff (3) einer Trenneinrichtung (5) zugeführt wird, die den auf die gewünschte Blaine-Mahlfeinheit vorzerkleinerten Teil (3a) zur Weitervermahlung mit dem anderen Stoff (8) weiterleitet und den anderen Teil (3b) für wenigstens einen weiteren Durchgang zur Vorzerkleinerung zurückführt.

3. Verfahren nach Anspruch 1, dadurch gekennzeichnet, daß die Vorzerkleinerung mit hohem Mahldruck, insbesondere nach dem Prinzip der Gutbettzerkleinerung, erfolgt.

4. Anlage zur gemeinsamen Mahlung von wenigstens zwei unterschiedlich mahlbaren Stoffen (3, 8), wie Klinker und Kalkstein, mit
a) einer ersten Mühle (1) zur Vorzerkleinerung des schwerer mahlbaren Stoffs (3) und
b) einer zweiten Mühle (2) zur Weitervermahlung des vorzerkleinerten Stoffs (3) zusammen mit dem anderen Stoff (8),
gekennzeichnet durch
c) eine Trenneinrichtung (5) zur Aufteilung des vorzerkleinerten Stoffs der ersten Mühle in eine erste Teilmenge (3a) mit einer Blaine-Mahlfeinheit von wenigstens 700 cm²/g, vorzugsweise jedoch wenigstens 1000 cm²/g, und eine verbleibende zweite Teilmenge (3b),
d) erste Fördermittel zum Weiterleiten der ersten Teilmenge (3a) zur zweiten Mühle (2) sowie
e) zweite Fördermittel zum Zurückführen der zweiten Teilmenge (3b) zur ersten Mühle (1).

5. Anlage nach Anspruch 4, dadurch gekennzeichnet, daß die erste Mühle (1) zwei mit hohem Druck gegeneinandergepreßte Mahlwalzen (1a, 1b) aufweist.

6. Anlage nach Anspruch 4, gekennzeichnet durch eine Vorrichtung zur dosierten Zugabe des leichter mahlbaren Stoffs (8) zur zweiten Mühle (2).

7. Anlage nach Anspruch 4, gekennzeichnet durch eine weitere, der zweiten Mühle (2) nachgeschalteten Trenneinrichtung zur Aufteilung des in der zweiten Mühle weitervermahlenen Gutes in abzuführendes Fertiggut (11 a) und zur zweiten Mühle (2) rückzuführendes Rücklaufgut (11b).

## Claims

1. Method of combined grinding of at least two materials (3, 8) of differing grindability, such as clinker and limestone, wherein the material (3) which is more difticult to grind is pre-crushed and thereafter is further ground together with the other material (8) to produce the finished material (11a), characterised in that the material (8) which is more difficult to grind is ground to a Blaine fineness of grinding of at least 700 cm²lg, but preferably at least 1000 cm²/g.

2. Method as claimed in Claim 1, characterised in that the pre-crushed material (3) which is more difficult to grind is delivered to a separating arrangement (5) by which the portion (3a) which has been pre-crushed to the desired Blaine fineness of grinding is passed on for further grinding with the other material (8) and the other portion (3b) is returned to the pre-crushing for at least one further pass.

3. Method as claimed in Claim 1, characterised in that the pre-crushing takes place with a high grinding pressure, particularly according to the principle of material bed crushing.

4. Apparatus for combined grinding of at least two materials (3, 8) of differing grindability, such as clinker and limestone, with
a) a first mill (1) for pre-crushing the material (3) which is more difficult to grind and
b) a second mill (2) for further grinding of the pre-crushed material (3) together with the other material (8), characterised by
c) a separating arrangement (5) for dividing the pre-crushed material from the first mill into a first part-quantity with a Blaine fineness of grinding of at least 700 cm²/g, but preferably at least 1000 cm²/g, and a remaining second part-quantity (3b),
d) first conveying means for passing on the first part-quantity (3a) to the second mill (2) as well as
e) second conveying means for returning the second part-quantity (3b) to the first mill (1).

5. Apparatus as claimed in Claim 4, characterised in that the first mill (1) has two grinding rolls (1a, 1b) pressed against one another at high pressure.

6. Apparatus as claimed in Claim 4, characterised by a device for proportioned feeding of the more easily grindable material (8) to the second mill (2).

7. Apparatus as claimed in Claim 4, characterised by a further separating arrangement disposed downstream of the second mill (2) for dividing the material which is further ground in the second mill into finished material (11 a) which is to be drawn off and recycled material (11 b) which is to be returned to the second mill (2).

## Revendications

1. Procédé de broyage commun d'au moins deux substances (3, 8) ayant des caractéristiques différentes de broyage, par exemple de kiinker et de calcaire, la substance plus difficilement broyable (3) subissant un fractionnement préalable et subissant ensuite la suite du broyage avec l'autre substance (8) pour donner le produit fini (11 a), caractérisé en ce que la substance plus difficilement broyable (8) subit un fractionnement préalable, avant la poursuite du broyage, à une finesse de broyage selon Blaine d'au moins 700 cm²/g, toutefois de préférence d'au moins 1000 _{cm}2jg_{.}

2. Procédé selon la revendication 1, caractérisé en ce que la substance difficilement broyable et ayant subi le fractionnement préalable (3) est dirigée sur un dispositif de séparation (5) qui transmet la fraction (3a) ayant subi un fractionnement préalable a la finesse voulue de broyage selon Blaine à la suite du broyage avec l'autre substance (8) et renvoie l'autre fraction (3b) pour au moins un autre passage au fractionnement préalable.

3. Procédé selon la revendication 1, caractérisé en ce que le fractionnement préalable est effectué avec une pression élevée de broyage, en particulier selon le principe du fractionnement d'un lit de matière.

4. Installation de broyage commun d'au moins deux substances (3, 8) ayant des caractéristiques différents de broyage, par exemple de kiinker et de calcaire, comprenant
a) un premier broyeur (1) de fractionnement préalable de la substance difficilement broyable (3) et
b) un deuxième broyeur (2) destiné à la suite du broyage de la substance (3) ayant subi un fractionnement préalable avec l'autre substance (8),
caractérisée par
c) un dispositif de séparation (5) destiné à subdiviser la substance ayant subi un fractionnement préalable et sortant du premier broyeur en une première fraction (3a) ayant une finesse de broyage selon Blaine d'au moins 700 cm²/g, toutefois de préférence d'au moins 1000 cm²/g, et en une deuxième fraction subsistante (3b),
d) un premier moyen de transport destiné à transmettre la première fraction (3a) au deuxième broyeur (2), ainsi que
e) un deuxième moyen de transport destiné à renvoyer la deuxième fraction (3b) dans le premier broyeur (1).

5. Installation selon la revendication 4, caractérisée en ce que le premier broyeur (1) comporte deux cylindres de broyage (1a, 1b) serrés l'un contre l'autre sous forte pression.

6. Installation selon la revendication 4, caractérisée par un dispositif de déversement dosé de la substance plus facilement broyable (8) dans le deuxième broyeur (2).

7. Installation selon la revendication 4, caractérisée par un autre dispositif de séparation monté en aval du deuxième broyeur (2) pour la subdivision du produit ayant subi la suite du broyage dans le deuxième broyeur en un produit fini à prélever (11 a) et en un produit de recyclage (11 b) devant être renvoyé dans le deuxième broyeur (2).
